# EUROPEAN PATENT SPECIFICATION

(11) **EP 1 962 358 B1**
(45) Date of publication and mention of the grant of the patent: **21.09.2011**
(21) Application number: 08157134.1
(22) Date of filing: 22.07.2005
(51) Int. Cl.: H01M 8/02, H01M 8/24, H01M 8/04, H01M 8/10

(54) **Fuel cell stack and fuel cell system having the same**
Brennstoffzellenstapel und Brennstoffzellensystem damit
Bloc de pile à combustible et système de pile à combustible en disposant

(30) Priority: 28.01.2005 KR 20050007919
(43) Date of publication of application: 27.08.2008
(62) Divisional of application: 05106732.0
(73) Proprietor: Samsung SDI Co., Ltd., Suwon-si Gyeonggi-do (KR)
(72) Inventor: Suh, Jun-Won Legal & IP Team, Samsung SDI Co. Ltd., Yongin-si, Kyunggi-do (KR); Kweon, Ho-Jin Legal & IP Team, Samsung SDI Co. Ltd., Yongin-si, Kyunggi-do (KR)
(74) Representative: Hengelhaupt, Jürgen

(56) References cited:
- WO-A-2004/079838
- JP-A- 2004 311 279
- PATENT ABSTRACTS OF JAPAN vol. 013, no. 058 (E-714), 9 February 1989 (1989-02-09) & JP 63 248073 A (FUJI ELECTRIC CO LTD), 14 October 1988 (1988-10-14)

## Description

### FIELD OF THE INVENTION

The present invention relates to a fuel cell system, and more particularly to a stack of a fuel cell system with improved cooling efficiency, and a fuel cell system having the same.

### BACKGROUND OF THE INVENTION

In general, a fuel cell is an electricity generating system for directly converting chemical energy into electric energy through an electrochemical reaction between oxygen contained in air and hydrogen contained in hydrocarbon-grouped materials such as methanol, ethanol, and natural gas. Specifically, fuel cells have a feature such that electricity is generated through an electrochemical reaction between a fuel gas and an oxidizing gas without combustion and with heat as a byproduct thereof.

Such fuel cells may be classified into phosphate fuel cells working at temperatures of about 150°C to 200°C, molten carbonate fuel cells working at high temperatures of about 600°C to 700°C, solid oxide fuel cells working at high temperatures of 1000°C or more, and polymer electrolyte membrane fuel cells and alkali fuel cells working at room temperature or at temperatures of 100°C or less, depending upon the kinds of electrolyte used. All such fuel cells basically work under the same principle, but may differ from one another in the kinds of fuel, the operating temperatures, the catalysts, and the electrolytes.

Recently developed polymer electrolyte membrane fuel cells (hereinafter referred to as a PEMFCs) have excellent output characteristic, low operating temperatures, and fast starting and response characteristics compared to other fuel cells. Accordingly, PEMFCs have a wide range of applications such as for mobile power sources for vehicles, for distributed power sources for homes or buildings, and for small-sized power sources for electronic apparatuses.

A PEMFC system basically requires a fuel cell main body (hereinafter referred to as a stack for the purpose of convenience), a reformer for reforming fuel to generate hydrogen gas, a fuel tank, and a fuel pump for supplying fuel to the reformer. In a PEMFC, the fuel stored in the fuel tank is supplied to the reformer by means of pumping power of the fuel pump. Then, the reformer reforms the fuel and generates the hydrogen gas to the stack. In the stack, hydrogen gas and oxygen electrochemically react with each other, thereby generating electrical energy.

Another type of fuel cell is a direct methanol fuel cell (hereinafter referred to as a DMFC) in which liquid-state methanol fuel is supplied directly to the stack. Unlike a PEMFC, a DMFC does not require a reformer.

In the fuel cell systems described above, the stack that generates electricity has a stacked structure of several or several tens of unit cells, each of which has a membrane-electrode assembly (hereinafter referred to as an MEA) and separators (or bipolar plates). The MEA includes an anode electrode and a cathode electrode attached to either side of an electrolyte membrane. The separator simultaneously functions as a passage through which oxygen and hydrogen gas required for the reaction of the fuel cell are supplied, and as a conductor connecting the anode electrode and the cathode electrode of each MEA in series.

Through the bipolar plate, fuel gas containing hydrogen is supplied to the anode electrode and oxygen gas containing oxygen is supplied to the cathode electrode. An oxidation reaction of the fuel gas takes place in the anode electrode and a reduction reaction of the oxygen gas takes place in the cathode electrode. Due to movement of electrons, electricity, heat, and water can be produced simultaneously.

In such a fuel cell system, when the operating temperature deviates from an appropriate range, the performance of the electrolyte membrane deteriorates and safety thereof cannot be ensured. Furthermore, in a serious case, the fuel cell may be damaged. Therefore, a cooling means using air or water is often provided within the fuel cell system in order to continuously remove heat generated inside the stack when operating the fuel cell system.

However, the adaptation of the same cooling scheme to all parts of the stack in a conventional cooling scheme makes it difficult to effectively cool all unit cells of a stack which may have substantially different temperature distributions depending on their positions within the stack.

Specifically, a unit cell located at a central portion among unit cells of the stack tends to have a temperature that is higher than that of a unit cell located near either end of the stack.

In the conventional fuel cell system, since heat generated in each of the stacked unit cells is not uniformly released, the performance of the stack deteriorates, thereby decreasing the overall efficiency of the fuel cell system.

JP 2004 311279 A concerns about a fuel cell comprising among others separators, each including slots with openings for supplying oxygen. By changing the cross-section area of the slots formed in each separator a heat adjustment is established.

### SUMMARY OF THE INVENTION

The present invention is directed to a fuel cell system that is capable of quickly releasing heat generated from the entire stack and of uniformly maintaining the temperature of the entire stack within an appropriate range by changing the heat-emission structure depending on location within the stack.

According to the present invention, a fuel cell stack and a fuel cell system are provided that are capable of uniformly maintaining temperature distribution throughout the entire stack by quickly absorbing heat locally generated in the stack.

According to one embodiment of the present invention, a fuel cell stack is provided, the stack comprising an electricity generating unit including a plurality of unit cells, and a cooling unit supplying specific unit cells with coolant to correspond to differences in heat-emission depending on the different positions of each of the unit cells.

The electricity generating unit may generate more heat toward a central portion of the stack, so the cooling unit must provide an increased amount of coolant toward a central portion of the stack.

According to the invention, there is provided a fuel cell stack comprising a plurality of electricity generators, each including separators attached to and disposed at both sides of a membrane-electrode assembly, and a plurality of heat releasing means for releasing heat generated from the electricity generators, wherein the heat releasing means have different heat release rates depending on their positions with respect to the electricity generators in the stack, wherein the heat release rates of the heat releasing means increase toward a central portion of the stack. The fuel cell stack is characterized in that the heat releasing means comprise metal plates which are attached to the separators and which have higher heat-conductivity than the separators, wherein the thickness of a metal plate depends on its position in the stack and increases for metal plates positioned towards the central portion of the stack. Here, the heat conductive media comprise metal plates made from a metal such as aluminum, copper, and iron.

The heat conductive media may be attached to one side surface of each of the separators or inserted into the separators as one layer. Further, one or more heat conductive media may be inserted into the separators at a predetermined distance as a plurality of layers.

The heat conductive media may optionally have one or more holes which are formed in a central portion of the heat conductive media to be connected to a coolant supply unit and through which a coolant flows.

Where holes are formed in the heat conductive media, the size of each of the holes may be made different depending on the positions of the electricity generators within the stack. The holes may be formed in the shapes of channels.

### BRIEF DESCRIPTION OF THE DRAWINGS

The above and other features and advantages of the present invention will become more apparent by describing in detail exemplary embodiments thereof with reference to the attached drawings, in which:
Fig. 1 is a schematic diagram illustrating the entire structure of a fuel cell system;
Fig. 2 is an exploded perspective view illustrating a stack according to an embodiment of the present invention;
Fig. 3 is an exploded perspective view illustrating a stack according to another embodiment of the present invention; and
Fig. 4 is a schematic diagram illustrating a heat emission structure for a stack according to another embodiment of the invention.

### DETAILED DESCRIPTION

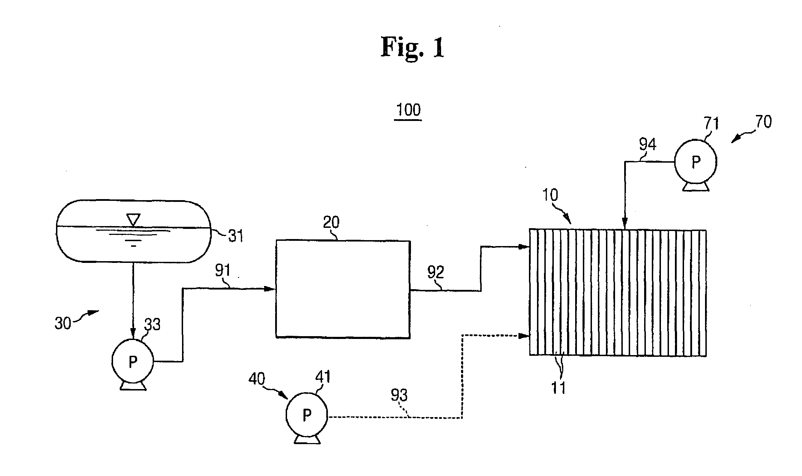

Fig. 1 is a schematic diagram illustrating a structure of a fuel cell system according to an embodiment of the present invention.

Referring to Fig. 1, the fuel cell system 100 comprises a stack 10 in which a number of electricity generators 11 for converting chemical energy into electric energy through a chemical reaction between hydrogen and oxygen are stacked, a fuel supply unit 30 for supplying the hydrogen-containing fuel to the electricity generators 11, an air supply unit 40 for supplying air to the electricity generators 11, and a coolant supply unit 70 for supplying a coolant to the stack 10 in order to control the temperature of the electricity generators 11.

The fuel supply unit 30 includes a fuel tank 31 in which a hydrogen-containing liquid-fuel is stored, and a fuel pump 33 connected to the fuel tank 31 to discharge the stored fuel to the stack 10 through an optional reformer 20 disposed between the fuel supply unit 30 and the stack 10. The reformer 20 is connected to the fuel supply unit 30 via a first supply line 91, and to the stack 10 via a second supply line 92.

When the fuel cell system employs a DMFC scheme for supplying liquid fuel directly to a stack to generate electricity, the reformer is excluded, unlike in the above-mentioned PEMFC scheme. Hereinafter, the present invention will be described with reference to a fuel cell system employing the PEMFC scheme which employs the reformer 20, but the present invent is not limited to the PEMFC scheme.

The reformer 20 generates hydrogen gas from the liquid fuel, which is required for generating electricity at the stack, and reduces the concentration of CO contained in the hydrogen gas. Generally, the reformer 20 includes a reforming section for reforming the liquid fuel to generate hydrogen gas, and a CO concentration reducing section for reducing the concentration of CO. The reforming section converts the fuel into reformed gas rich in hydrogen through a catalytic reaction such as steam reformation, partial oxidation, autothermal reaction. The CO reducing section reduces the concentration of CO in the reformed gas using a catalytic reaction such as a water-gas shift method, a preferential oxidation method, etc., or purification of hydrogen using a separating membrane.

The fuel includes hydrocarbon fuels, which can be easily loaded and stored. Examples include methanol, ethanol, natural gas, etc. The fuel may further include a mixture of water and a hydrocarbon fuel such as methanol, ethanol, natural gas, etc. Hereinafter, methanol, ethanol, and natural gas are referred to as "liquid fuels" for the purpose of convenience.

Pure oxygen gas stored in an additional storage unit or external air containing oxygen may be used as an oxygen source.

The air supply unit 40 includes an air pump 41 which is connected to the stack 10, and which draws in external air and supplies it to the stack 10. The stack 10 is connected to the air supply unit 40 through a third supply line 93.

Further, the coolant supply unit 70 includes a pump 71 which draws in a coolant and produces the coolant to the stack 10 through a fourth supply line 94. Any one of a number of different coolants may be used. Examples include cooling water which can be provided in either a liquid phase or a gaseous phase. In this embodiment, however, it will be described with reference to an example in which air is used as the coolant, which can be easily obtained in nature.

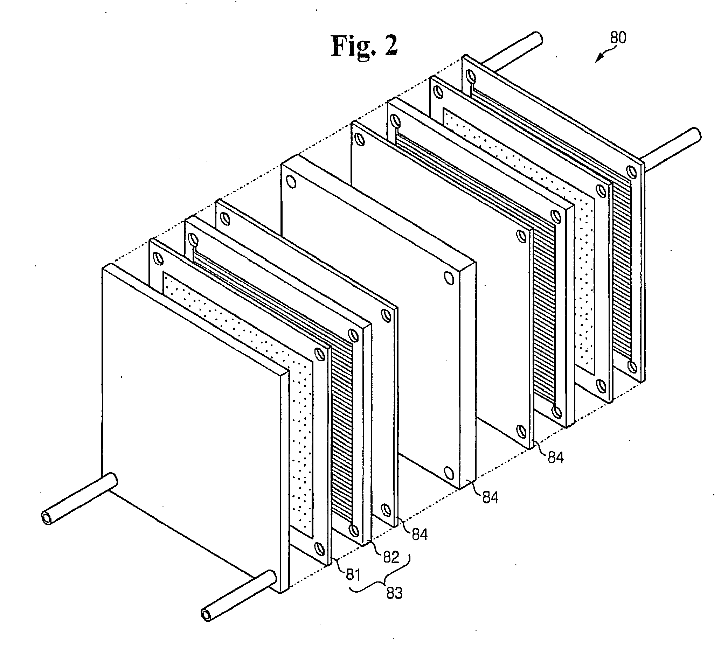

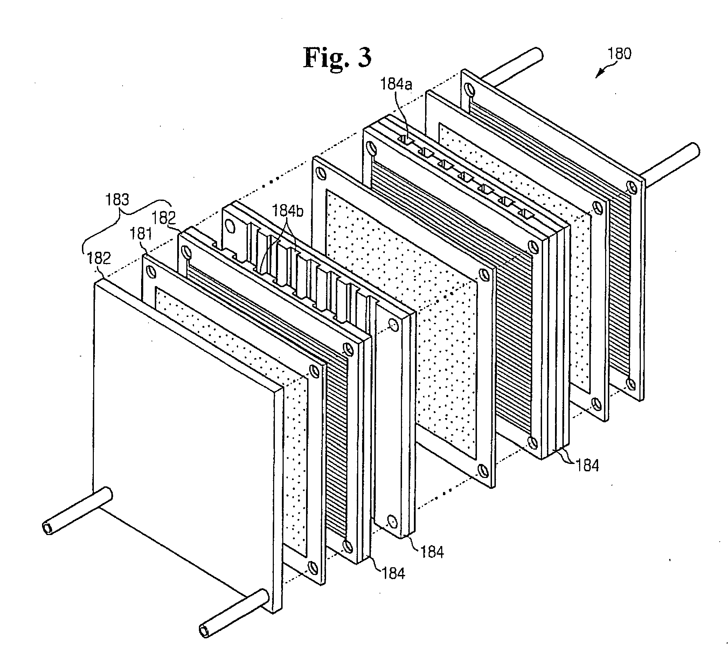

Next, in the fuel cell system having the described structure, the stack 10 which generates electricity using fuel and air supplied from the fuel supply unit 30 and the oxygen supply unit 40 is cooled using a coolant supplied from the coolant supply unit 70 will be described with reference to Figs. 2 and 3.

Fig. 2 illustrates a stack according to an embodiment of the present invention, in which separators employ a heat conductive medium.

As shown in Fig. 2, a plurality of electricity generators 83 including separators 82 disposed at both sides of an MEA 81 are stacked to constitute a stack 80.

A metal plate 84 having higher heat-conductivity than that of the separator 82 is attached to each separator 82, and the sizes of the metal plates 84 are different depending on the positions of the electricity generators 83 within the stack 80. That is, the thicknesses of the metal plates 84 become larger toward a central portion of the stack 80 from the outer sides.

According to this configuration, heat generated from the electricity generators 83 is quickly absorbed and released by the metal plates 84 that have higher heat-conductivity than those of the separators 82, so the stack 80 can release heat more quickly compared to another stack including only the separators 13. Further, since the thickness of the metal plates 84 positioned at the central position of the stack 80 are greater than those of the metal plates 84 positioned at the outer side, the stack 80 can effectively release more heat from the thicker plates, whereby a uniform temperature distribution can be maintained throughout the entire region.

In the present embodiment, the metal plate 84 is formed in the shape of a thin plate and is disposed at an outer side surface of the separator 82, that is, at a surface opposite to a surface in contact with the MEA 81. The thicknesses of the metal plates 84 are not limited to any specific values.

The separator 82 may be made of graphite. The metal plates 84 are made of a material which has higher heat-conductivity than that of the separator 82. Exemplary materials include aluminum, copper, and iron.

Further, the metal plate 84 may optionally have a plurality of holes through which a coolant such as cooling air may be supplied from the coolant supply unit in order to enhance the heat-emission effect. Such an embodiment is illustrated in further detail in Fig. 3.

As shown in Fig. 3, the stack 180 is constructed such that the metal plates 184, which are made of a heat conductive medium, are disposed between the electricity generators 183. Holes 184a are formed on each metal plate 184. The size of each of the holes 184a increases toward a central portion of the stack 180 from the outer sides, depending on the position of the electricity generators 183 within the stack 180. Here, the thickness of each of the metal plates 184 may be the same, or may be different as shown in Fig. 2.

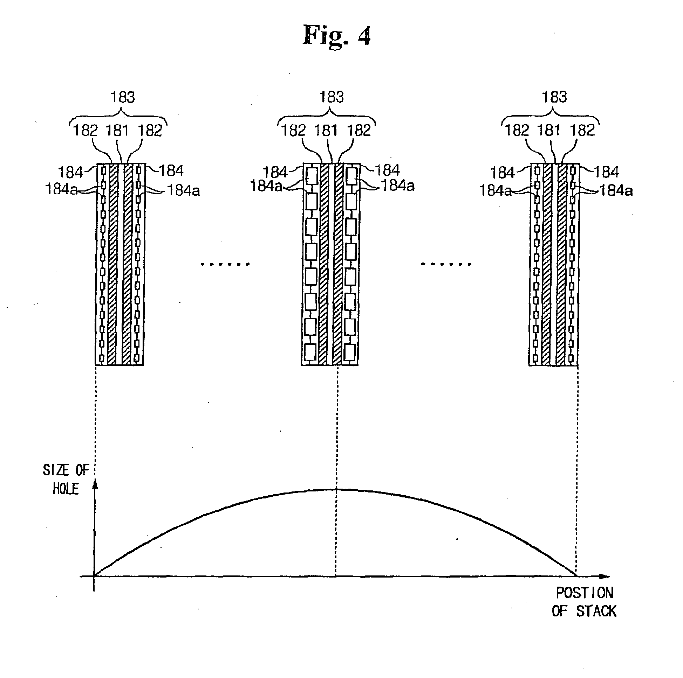

Fig. 4 illustrates the differences in the sizes of the holes 184a depending on their position within the stack 180 shown in Fig. 3. As shown in Fig. 4, a plurality of electricity generators 183 including MEAs 181 and separators 182 are stacked to constitute the stack 180, and the sizes of the holes 184a formed on the metal plates 184 attached to the separators 182 increases toward a central portion of the stack 180 from both sides thereof.

Here, the difference in size between the holes 184a formed in the metal plate 184 located at the outermost side of the stack 180 and the holes 184a formed in the metal plate 184 located at a central portion are not limited to any specific values.

Further, the size of the holes 184a may be considered to be an individual sectional area of each of the holes 184a formed in any one of the metal plates 184 or the sum of sectional areas of all the holes 184a formed in any one of the metal plates 184.

According to this embodiment, it is noted that the amount of heat generated from the electricity generator 183 increases toward a central portion of the stack 180. Therefore, holes 184a having different sizes as mentioned above are formed on the metal plates 184, so a greater amount of cooling air is supplied to the electricity generators 183 located at a central portion of the stack 180 through the holes 184a. Therefore, the electricity generator 183 located at the central portion of the stack 180 can release a greater amount of heat compared to the electricity generators 183 located at the outer sides.

In this embodiment, channels 184b formed in a metal plate 184 corresponding to any one of electricity generators 183, and channels 184b formed in a metal plate 184 corresponding to an adjacent electricity generator 183 are joined together while both the metal plates 184 are closely adhered to each other to construct the stack 180 in which the holes 184a are formed.

The coolant such as cooling air removes the heat generated from the electricity generators 183 by releasing the heat outside after it passes through the holes 184a.

As mentioned above, the size of each of the holes 184a in the stack 180 is made different depending on its position within the stack 180, and a greater amount of air is supplied to the metal plate 184 located at a central portion of the stack 180 than those located at the outer sides. Therefore, more heat generated at the central portion of the stack 180 can be removed, providing a uniform temperature distribution throughout all the regions of the stack 80.

According to the present invention described above, the temperature of the stack at a central portion thereof can be significantly lowered, such that it is possible to have a uniform temperature distribution through the entire stack and to maintain the temperature of the stack at an appropriate level.

Further, the cooling effect of the stack can be enhanced by changing the flow rate of the coolant depending on the amount of heat generated corresponding to location within the stack.

## Claims

1. A fuel cell stack (80, 180) comprising:
a plurality of electricity generators (83, 183), each including separators (82, 182) attached to and disposed at both sides of a membrane-electrode assembly (81, 181); and
a plurality of heat releasing means for releasing heat generated from the electricity generators (83, 183), wherein the heat releasing means have different heat release rates depending on their positions with respect to the electricity generators (83, 183) in the stack (80, 180), wherein the heat release rates of the heat releasing means increase toward a central portion of the stack (80, 180)
**characterized in that**
the heat releasing means comprise metal plates (84, 184) which are attached to the separators (82, 182) and which have higher heat-conductivity than the separators (82, 182), wherein the thickness of a metal plate (84, 184) depends on its position in the stack (80, 182) and increases for metal plates (84, 184) positioned towards the central portion of the stack (80, 182).

2. The stack of claim 1, wherein the metal plates (84, 184) are made of a metal selected from aluminum, copper, and iron.

3. The stack of claims 1 or 2, wherein each plate (84, 184) is attached to one side surface of a separator (82, 182).

4. The stack of claim 1 or 2, wherein the plates (184) further comprise one or more holes (184a) through which a coolant may flow.

5. The stack of claim 4, wherein a size of the holes (184a) formed in the plates (184) varies depending on the position of the electricity generators (183).

6. The stack of claim 5, wherein each hole (184a) is formed in the shape of a channel.

## Patentansprüche

1. Brennstoffzellenstapel (80, 180) mit:
einer Vielzahl von Stromerzeugern (83, 183), die jeweils Trennvorrichtungen (82, 182) umfassen, die an einer Membranelektrodenanordnung (81, 181) befestigt und zu beiden Seiten dieser Membranelektrodenanordnung (81, 181) angeordnet sind; und
einer Vielzahl von Wärmeabgabemitteln, um Wärme, die von den Stromerzeugern (83, 183) erzeugt wird, abzugeben, wobei die Wärmeabgabemittel je nach ihren Positionen in Bezug auf die Stromerzeuger (83, 183) in dem Stapel (80, 180) unterschiedliche Wärmeabgaberaten besitzen, wobei die Wärmeabgaberaten der Wärmeabgabemittel in Richtung eines zentralen Abschnittes des Stapels (80, 180) zunehmen,
**dadurch gekennzeichnet, dass** die Wärmeabgabemittel Metallplatten (84, 184) umfassen, die an den Trennvorrichtungen (82, 182) befestigt sind, und die eine höhere Wärmeleitfähigkeit besitzen als die Trennvorrichtungen (82, 182), wobei die Stärke einer Metallplatte (84, 184) von ihrer Position in dem Stapel (80, 82) abhängt, und bei Metallplatten (84, 184) zunimmt, die in Richtung des zentralen Abschnittes des Stapels (80, 82) angeordnet sind.

2. Stapel nach Anspruch 1, wobei die Metallplatten (84, 184) aus einem Metall hergestellt sind, das aus Aluminium, Kupfer und Eisen ausgewählt ist.

3. Stapel nach Anspruch 1 oder 2, wobei jede Platte (84, 184) an einer Seitenfläche einer Trennvorrichtung (82, 182) befestigt ist.

4. Stapel nach Anspruch 1 oder 2, wobei die Platten (184) weiterhin ein Loch oder mehrere Löcher (184a) umfassen, durch die ein Kühlmittel fließen kann.

5. Stapel nach Anspruch 4, wobei eine Größe der Löcher (184a), die in den Platten (184) gebildet sind, je nach der Position der Stromerzeuger (183) variiert.

6. Stapel nach Anspruch 5, wobei jedes Loch (184a) die Form eines Kanals einnimmt.

## Revendications

1. Empilement (80, 180) de piles à combustible comprenant :
plusieurs générateurs d'électricité (83, 183), chacun comportant des séparateurs (82, 182) disposés aux deux côtés d'un ensemble membrane-électrodes (81, 181) en leur étant fixés ; et
plusieurs moyens de libération de chaleur destinés à libérer la chaleur générée par les générateurs d'électricité (83, 183), dans lequel les moyens de libération de chaleur ont des puissances calorifiques différentes selon leurs positions par rapport aux générateurs d'électricité (83, 183) dans l'empilement (80, 180), dans lequel les puissances calorifiques des moyens de libération de chaleur augmentent vers une partie centrale de l'empilement (80,180)
**caractérisé en ce que**
les moyens de libération de chaleur comprennent des plaques métalliques (84, 184) qui sont fixées aux séparateurs (82, 182) et dont la conductibilité thermique est supérieure à celle des séparateurs (82, 182), dans lequel l'épaisseur d'une plaque métallique (84, 184) dépend de sa position dans l'empilement (80, 182) et augmente pour des plaques métalliques (84, 184) positionnées vers la partie centrale de l'empilement (80,182).

2. Empilement de la revendication 1, dans lequel les plaques métalliques (84, 184) sont réalisées en un métal choisi parmi l'aluminium, le cuivre et le fer.

3. Empilement des revendications 1 ou 2, dans lequel chaque plaque (84, 184) est fixée à une surface latérale d'un séparateur (82, 182).

4. Empilement de la revendication 1 ou 2, dans lequel les plaques (184) comprennent en outre un ou plusieurs trous (184a) à travers lesquels un liquide de refroidissement peut circuler.

5. Empilement de la revendication 4, dans lequel une dimension des trous (184a) formés dans les plaques (184) varie en fonction de la position des générateurs d'électricité (183).

6. Empilement de la revendication 5, dans lequel chaque trou (184a) a la forme d'un canal.
